Europäisches Patentamt

European Patent Office

Office européen des brevets

(11) Veröffentlichungsnummer: **0 000 056**
**B1**

(12) **EUROPÄISCHE PATENTSCHRIFT**

(21) Anmeldenummer: **78100098.9**

(51) Int. Cl³: **C 04 B 25/06, C 04 B 21/08**

(22) Anmeldetag: **06.06.78**

(54) **Nichtbrennbarer Dämmstoff**

(30) Priorität: **10.06.77 DE 2726105**

(43) Veröffentlichungstag der Anmeldung:
**20.12.78 Patentblatt 78/01**

(45) Bekanntmachung des Hinweises auf die Patenterteilung:
**30.04.80 Patentblatt 80/09**

(84) Benannte Vertragsstaaten:
**BE CH DE FR GB NL**

(56) Entgegenhaltungen:
**NL - A - 70 06 704
US - A - 3 767 612
CHEMICAL ABSTRACTS, Vol. 77, Nr. 26; 25.
Dezember 1972; Nr. 165497v
J. Hiroshima
JP 7 219 000**

(73) Patentinhaber: **BASF Aktiengesellschaft
Carl-Bosch-Strasse 38
D - 6700 Ludwigshafen (DE)**

(72) Erfinder: **Mahnke, Harald, Dr.
Osloer Weg 48
D - 6700 Ludwigshafen (DE)
Nieberle, Juergen, Dr.
Prager Strasse 23
D - 6700 Ludwigshafen (DE)
Trautz, Volker, Dr.
Kastanienweg 2
D - 6801 Neckarhausen (DE)
Weber, Heinz, Dr.
Am Wehrhaus 26
D - 6718 Gruenstadt 1 (DE)**

Courier Press, Leamington Spa, England.

### Nichtbrennbarer Dämmstoff

Die Erfindung betrifft nichtbrennbare Dämmstoffe mit hoher Feuerwiderstandsdauer und verminderter Wasseraufnahme für Bau- und Isolierzwecke aus anorganischen Leichtpartikeln, die durch temperaturbeständige, hochpolymere organische Bindemittel miteinander verbunden sind.

Gegenstand der deutschen Patentanmeldung DT—OS 26 30 834 ist ein nichtbrennbarer Dämmstoff mit hoher Feuerwiderstandsdauer und einer Dichte von 80 bis 230 g/l aus

A) 99 bis 80 Gew.% anorganischer Leichtpartikel mit einem mittleren Partikeldurchmesser zwischen 0,05 und 3 mm und einer Schüttdichte zwischen 30 und 150 g/l,

B) 0 bis 40 Gew.% faseriger oder körniger anorganischer Zusatzstoffe,
wobei die Partikel miteinander verbunden sind durch

C) 1 bis 20 Gew.% eines temperaturbeständigen organischen hochmolekularen Bindemittels mit einer Dauergebrauchstemperatur nach DIN 53 446 von mehr als 100°C.

Derartige Dämmstoffe haben den für manche Anwendungszwecke wesentlichen Nachteil, daß sie verhältnismäßig viel Wasser aufnehmen. Dies kann eine Verschlechterung der Wärmedämmeigenschaften zur Folge haben, außerdem ist die Frostbeständigkeit vermindert. Der Erfindung lag daher die Aufgabe zugrunde, bei Dämmstoffen nach der Patentanmeldung DT—OS 26 30 834 die Wasseraufnahme herabzusetzen.

Es wurde gefunden, daß dies erreicht wird, wenn der Dämmstoff als zusätzliches Bindemittel C' 0,2 bis 4, vorzugsweise 0,5 bis 2 Gew.%, bezogen auf die Mischung, eines Alkylphenol / Phenol / Formaldehyd-Kondensationsproduktes enthält. Derartige Phenolharze auf Basis Alkylphenol wirken hydrophobierend auf die Dämmstoffe.

Die erfindungsgemäßen Dämmstoffe sind nach DIN 4102 nicht brennbar und gehören damit der Baustoffklasse A an; sie weisen bei einer Dämmstoffdicke von 5 cm und beidseitiger Beplankung mit 3 mm Asbestzement eine so hohe Feuerwiderstandsdauer auf, daß sie die Anforderungen der Widerstandsklasse W 90 nach DIN 4102 erfüllen. Sie haben einer verhältnismäßig niedrige Dichte, die zwischen 80 und 230, vorzugsweise zwischen 120 und 180 g/l liegt; dadurch haben sie ein sehr gutes Wärmedämmvermögen.

Die verwendeten anorganischen Leichtpartikel A haben einen mittleren Teilchendurchmesser zwischen 0,05 und 3 mm, vorzugsweise zwischen 0,2 und 2 mm. Ihre Schüttdichte liegt zwischen 30 und 150, vorzugsweise zwischen 40 und 80 g/l. Bevorzugt werden silikatische Materialien verwendet, wie wasserunlösliche Alkalisilikate mit einem $SiO_2:Me_2O_3$-Verhältnis von größer als 4,5:1 oder Silikate der 2. und 3.

Hauptgruppe des Periodensystems. Besonders bevorzugt sind geblähter Perlit oder Vermiculit; geeignet sind aber auch geblähtes Schaumglas, Flugasche oder geblähter Gips.

Perlit ist ein hydraulisches Aluminiumsilikat, das sich von Rhyolith-Lava ableitet. Es enthält im wesentlichen 70 bis 85% $SiO_2$, 12 bis 14% $Al_2O_3$ und 2 bis 3% Wasser. Vermiculit ist ein hydraulisches Magnesiumaluminiumsilikat mit unbestimmter Struktur mit einem Gehalt von 8 bis 12% MgO, 60 bis 65% $SiO_2$, 6 bis 12% $Al_2O_3$ und 1 bis 4% Wasser.

Die Dämmstoffe können gegebenenfalls bis zu 40 Gew.% faseriger oder körniger anorganischer Zusatzstoffe B enthalten. Faserige Zusätze verbessern den Elastizitätsmodul der Baustoffe. Die Fasern sollen eine Länge von 2 mm bis 3 cm aufweisen. Bevorzugt sind Glasfasern, die in Mengen von 2 bis 10 Gew.%, und Stein- oder Mineralwolle, die in Mengen von 5 bis 30 Gew.%, jeweils bezogen auf die Gesamtmischung, eingesetzt werden. Körnige Zusätze verbessern die Festigkeit der Baustoffe. Die Körner sollen einen Durchmesser von <100 $\mu$m aufweisen. Bevorzugt sind Talkum oder Gips, die in Mengen von 15 bis 30 Gew.%, bezogen auf die Gesamtmenge, eingesetzt werden.

In den erfindungsgemäßen Dämmstoffen sind die Partikel A und B durch 1 bis 20, vorzugsweise 8 bis 20 Gew.% eines temperaturbeständigen, organischen, hochmolekularen Bindemittels miteinander verbunden. Die Bindemittel weisen eine Grenztemperatur nach DIN 53 446 von mehr als 100°C, vorzugsweise von mehr als 150°C auf. Als Grenztemperatur ist die Temperatur definiert, bei welcher der betreffende Stoff 25 000 stunden an der Luft gelagert werden kann, ohne daß sich seine Eigenschaften erkennbar ändern.

Bei der Herstellung der erfindungsgemäßen Dämmstoffe werden zweckmäßigerweise härtbare Bindemittel-Vorläufer in Form von wäßrigen Dispersionen oder Lösungen eingesetzt, die gegebenenfalls übliche Dispergierstabilisatoren, Vernetzungsmittel, Katalysatoren, Verlaufsmittel oder andere Zusatzstoffe in geringen Mengen enthalten können.

Als Bindemittel-Vorläufer werden bei der Herstellung der Dämmstoffe bevorzugt organische Polykondensate oder Polyaddukte verwendet, die bei erhöhten Temperaturen, gegebenenfalls in Gegenwart von Vernetzungsmitteln oder Vernetzungskatalysatoren unter Weiterkondensation bzw. Vernetzung zum hochtemperaturbeständigen hochmolekularen Bindemittel aushärten. Da bei der Aushärtung von Harzen auf Basis Alkylphenol Temperaturen von 200°C höchstens kurzzeitig überschritten werden sollten, sind vor allem solche Bindemittel geeignet, die niedrige Aushärtetemperaturen aufweisen.

Gut geeignet sind beispielsweise: Polyesterimide, Polyurethane, Polyester, Melamin / Formaldehyd-Harze und insbesondere Phenol/ Formaldehyd-Harze.

Wäßrige Dispersionen von Polyesterimiden sind z.B. beschrieben in den DT—OS 2 210 484 und 2 351 077. Es sind Polykondensationsprodukte aus aromatischen Polycarbonsäuren, mehrwertigen Alkoholen und mehrwertigen Aminen. Sie enthalten im allgemeinen 0,5 bis 7, vorzugsweise 1 bis 5 Gew.% Imidstickstoff in Form von fünfgliedrigen Imidringen, die mit aromatischen Kernen anelliert sind.

In den wäßrigen Dispersionen liegen die Polyesterimide in Teilchenform mit durchschnittlichen Teilchendurchmessern unter 50, vorzugsweise unter 5 $\mu$m vor. Sie enthalten im allgemeinen 0,01 bis 5, vorzugsweise 0,1 bis 3 Gew.% Dispergierhilfsmittel, wobei vor allem polare Gruppen enthaltende hochpolymere organische Substanzen in Frage kommen, wie z.B. Polyvinylalkohol, Celluloseäther, Polyvinylpyrrolidon, Polyacrylsäure, teilverseifte Copolymerisate aus Acrylestern und Acrylnitril; bevorzugt sind Copolymerisate aus Vinylpyrrolidon und Vinylpropionat. Außerdem enthalten sie Vernetzungskatalysatoren in Mengen von 0,5 bis 5 Gew.%, z.B. Oxotitenate, Triäthanolamintitanat, Titanlaktat oder Titanoxalat. Darüber hinaus können sie Verlaufmittel, Verdickungsmittel, Antithioxotropiermittel und Neutralisationsmittel enthalten. Beim Aushärten tritt eine Weiterkondensation und Vernetzung der Polyesterimide ein.

Weiterhin sind als Bindemittel Polyurethane geeignet. Polyurethane sind Polyaddukte aus Polyisocyanaten und hydroxylgruppenhaltigen Polyestern oder Polyäthern. Wäßrige Dispersionen von Polyurethane bildenden Ausgangsstoffen sind in der DT—OS 2 537 207 beschrieben. Die Ausgangsstoffe sind Mischungen aus 70 bis 10 Gew.% eines Polyesters oder Polyäthers mit einer Hydroxylzahl oberhalb von 20 und 30 bis 90 Gew.% eines verkappten Polyisocyanats. Aromatische Polyisocyanate, die mit einem Phenol oder einem Lactam verkappt sind, sind besonders geeignet. Die dispergierten Teilchen haben einen Durchmesser zwischen 0,05 und 2 $\mu$m; die Dispersion enthält wieder vorzugsweise Dispergierhilfsmittel. Beim Aushärten spaltet das Verkappungsmittel ab und das freigesetzte Polyisocyanat kann mit den Hydroxylgruppen des Polyesters oder Polyäthers unter Polyurethanbindung vernetzen.

Geeignet sind ferner vernetzte Polyester, vorzugsweise solche auf Basis von aromatischen Dicarbonsäuren.Hier kann man wäßrige Dispersionen oder Lösungen herstellen, die den unvernetzten oder nur gering vernetzten Polyester zusammen mit Polyolen als Vernetzungsmittel enthalten. Beim Aushärten tritt Weiterkondensation unter Vernetzung ein.

Weiterhin sind vernetzte Melamin/Formaldehyd- und Phenol/Formaldehyd-Harze geeignet. Hier werden Vorkondensate aus Melamin, Phenol oder Kresol mit Formaldehyd mit Molgewichten zwischen etwa 400 und 800 eingesetzt. Besonders vorteilhaft werden wäßrige Lösungen von Phenol/Formaldehyd-Kondensaten verwendet.

Die erfindungsgemäß zuzusetzenden Bindemittel C' sind Kondensationsprodukte aus einem Alkylphenol, Phenol und Formaldehyd. Sie werden hergestellt durch basisch katalysierte Kondensationen von Alkylphenol, Phenol und Formaldehyd in wäßriger Lösung in Gegenwart eines Emulgators und eines Schutzkolloids. Ein geeignetes Herstellungsverfahren ist z.B. in der DT—OS 23 30 815 beschrieben. Vorzugsweise werden Alkylphenoll mit 2 bis 12 Kohlenstoffatomen im Alkylrest eingesetzt, besonders geeignet sind Octylphenol und Nonylphenol. Das Molverhältnis Phenol zu Alkylphenol kann n weiten Grenzen zwischen 5:1 und 1:5, vorzugsweise zwischen 2:1 und 1:2 schwanken; das Molverhältnis Formaldehyd zu der Summe Phenol + Alkylphenol kann höher sein als in der DT—OS 23 30 815, es liegt bevorzugt zwischen 2,3:1 und 1,6:1.

Ein bevorzugtes Verfahren zur Herstellung der erfindungsgemäßen Dämmstoffe besteht aus folgenden Schritten:

a) Leichtpartikel und Zusatzstoffe sowie eine 1 bis 50 gewichtsprozentige wäßrige Dispersion oder Lösung des härtbaren Bindemittel-Vorläufers werden vermischt;

b) das Wasser wird — falls erforderlich — größtenteils mechanisch entfernt;

c) die feuchte Mischung wird zu Platten einer Dicke von 1 bis 25, vorzugsweise 2 bis 8 cm, gepreßt;

d) schließlich wird — vorzugsweise in Gegenwart von Katalysatoren, wie p-Toluolsulfonsäure — bei Temperaturen zwischen 80 und 200°C, insbesondere zwischen 100 und 160°C ausgehärtet.

Die Herstellungsweise ist etwas verschieden, je nachdem, ob sie faserige Zusatzstoffe enthalten oder nicht.

Bei Dämmstoffen, die keine Fasern enthalten, werden die Leichtpartikel mit einer etwa 1 bis 50, vorzugsweise 2 bis 10 gewichtsprozentigen wäßrigen Dispersion oder Lösung des Bindemittel-Vorläufers besprüht, wobei die Partikel in üblichen Mischmaschinen in Bewegung gehalten werden. Es ist ein besonderer Vorteil der Verwendung von wäßrigen Bindemittelsystemen, daß eine besonders feine und gleichmäßige Verteilung von Leichtpartikel und Bindemittel erhalten wird. Das Produkt wird gegebenenfalls mechanisch von einem Teil des Wassers befreit und dann im feuchten Zustand in üblichen Pressen bei Drücken von etwa 1 bis 10 kp/cm$^2$ zu Platten gepreßt. Diese werden dann weiter erhitzt, wobei Weiterkondensation und Vernetzung unter Ausbildung des temperaturbeständigen organischen hochmolekularen Bindemittels eintritt.

Bei Dämmstoffen, die Fasern enthalten, werden zunächst die Fasern in Wasser, welches oberflächenaktive Stoffe als übliche Aufschlußmittel gelöst enthält, unter Rühren aufgeschlämmt. Dazu werden dann die Bindemitteldispersionen oder -lösungen sowie die Leichtpartikel gegeben und kräftig vermischt. Auf einem in der Papierindustrie üblichen Blattbildner wird der Großteil des Wassers abgesaugt. Nach leichtem Anpressen wird die Platte getrocknet und gegebenenfalls die Vernetzung durchgeführt.

Die erfindungsgemäßen Dämmstoffe können mit üblichen Deckschichten, wie Asbestzement, Gipskarton oder Metallblechen, verklebt und zu Sandwichelementen verarbeitet werden. Sie eignen sich zur Herstellung von nichttragenden Wänden, Decken und Böden; sie können aber auch zur Beschichtung von tragenden Wänden, Decken und Böden oder in Lager- oder Kühlhäusern als wärmeisolierende und den Feuerdurchgang hemmende Schicht eingesetzt werden.

### Biespiele

a) Herstellung des Bindemittels C'

1035 Teile einer 14%-igen wäßrigen Lösung von Polyvinylalkohol werden mit 400 Teilen Wasser, 288 Teilen eines äthoxylierten Octylphenols und 200 Teilen 25%-igem Ammoniak unter Rühren homogenisiert. Dann werden 846 Teile Phenol, 1854 Teile Octylphenol (Molverhältnis Formaldehyd zu Gesamtphenol 2:1) und 2700 Teile einer 40%-igen wäßrigen Lösung von Formaldehyd zugegeben und unter kräftigem Rühren etwa 4 Stunden zum Rückfluß erhitzt. Danach wird unter weiterem Rühren auf Raumtemperatur abgekühlt. Man erhält eine homogene, stabile Dispersion, mit einem Trockengehalt (2 Stunden bei 120°C) von 50%, einer Viskosität bei 20°C von 600 mPas und einem pH-Wert von 8,0.

b) Herstellung des Dämmstoffs

89 Teile einer 60%-igen wäßrigen Phenolharz-Lösung (Molverhältnis Phenol zu Formaldehyd von 1:1,6), 3 Teile p-Toluolsulfonsäure und 8 Teile der 50%-igen wäßrigen Dispersion a) werden homogen vermischt. Blähperlit mit einem mittleren Teilchendurchmesser von 0,7 mm und einer Schütt-dichte von 50 g/l wird in einem Mischwerk mit diesem Bindemittel so verleimt, daß die Mischung, bezogen auf Feststoff, 13,3% des Phenol-Harzes und 1% des Phenol-Alkylphenol/Formaldehyd-Kondensates enthält. Das beleimte Gut wird in einer üblichen Preßapparatur mit einem Druck von etwa 2,5 bis 3,0 kp/cm³ zu einem Preßling des Raumgewichts 200 g/l verdichtet und anschließend auf eine Temperatur von etwa 150°C aufgeheizt, wobei das Bindemittel aushärtet.

Eine 50 mm starke Dämmplatte zeigt im 24 Stunden-Untertauchtest nach DIN 53 428 eine Wasseraufnahme von 5 Vol%.

Im Vergleich dazu zeigt eine Dämmplatte gleichen Raumgewichts, die aber kein hydrophobierendes Bindemittel C' enthält, eine Wasseraufnahme von 33 Vol%.

### Patentansprüche

1. Nichtbrennbarer Dämmstoff mit hoher Feuerwiderstandsdauer und einer Dichte von 80 bis 230 g/l aus

A) 99 bis 40 Gew.% anorganischer Leicht-partikel mit einem mittleren Partikeldurch-messer zwischen 0,05 und 3 mm und einer Schüttdichte zwischen 30 und 150 g/l,

B) 0 bis 40 Gew.% faseriger oder körniger anorganischer Zusatzstoffe, wobei die Partikel miteinander verbunden sind durch

C) 1 bis 20 Gew.% eines temperaturbeständigen organischen hochmolekularen Bindemittels mit einer Dauergebrauchstemperatur nach DIN 53 446 von mehr als 100°C, *dadurch gekennzeichnet*, daß der Dämmstoff als zusätzliches Bindemittel 0,2 bis 4 Gew.%, bezogen auf die Mischung, eines Alkyl-phenol / Phenol / Formaldehyd-Kondensations-produktes C' enthält.

2. Nichtbrennbarer Dämmstoff nach Anspruch 1, *dadurch gekennzeichnet*, daß die Leichtpartikel A aus geblähtem Perlit oder Vermiculit sind.

3. Nichtbrennbarer Dämmstoff nach Anspruch 1, *dadurch gekennzeichnet*, daß das Bindemittel C ein Phenol/Formaldehyd-Kondensat ist.

4. Nichtbrennbarer Dämmstoff nach Anspruch 1, *dadurch gekennzeichnet*, daß das Alkylphenol des Bindemittels C' ein Alkylphenol mit 2 bis 12 Kohlenstoffatomen im Alkylrest ist.

### Claims

1. A non-flammable insulating material having good fire resistance and a density of 80 to 230 g/l, which material comprises

A) from 99 to 40% by weight of inorganic lightweight particles having a mean particle diameter of from 0.05 to 3 mm and a bulk density of from 30 to 150 g/l, and

B) from 0 to 40% by weight of fibrous or granular inorganic additives, the particles being bonded to one another by

C) from 1 to 20% by weight of a heat-resistant organic high molecular weight binder having a maximum use temperature according to DIN 53,446 of more than 100°C, wherein the insulating material contains, as an additional binder, from 0.2 to 4% by weight, based on the mixture of an alkylphenol/phenol/ formaldehyde condensate C'.

2. A non-flammable insulating material as claimed in claim 1, wherein the lightweight particles A consist of expanded perlite or vermiculite.

3. A non-flammable insulating material as claimed in claim 1, wherein the binder C is a phenol/formaldehyde condensate.

4. A non-flammable insulating material as claimed in claim 1, wherein the alkylphenol of binder C' is an alkylphenol with 2 to 12 carbon atoms in the alkyl.

## Revendications

1. Matériau isolant incombustible avec une durée de résistance au feu élevée et d'une masse volumique comprise entre 80 et 230 g/l, composé de:

A) 99 à 40 % en poids d'une matière minérale légère en particules d'une granulométrie comprise entre 0,05 et 3 mm et d'une masse volumique apparente comprise entre 30 et 150 g/l;

B) 0 à 40 % en poids de matières minèrales additionnelles fibreuses ou granuleuses, les particules étant liées entre elles par

C) 1 à 20 % en poids d'un liant organique à poids moléculaire élevé, résistant aux températures élevées et dont le point de résistance à la chaleur permanente selon la norme DIN 53 446 est supérieur à 100°C, caractérisé en ce qu'il contient en tant que liant additionnel un produit de la condensation d'un alcoyl-phénol, d'un phénol et du formaldéhyde C' en une proportion comprise entre 0,2 et 4 % en poids.

2. Matériau isolant incombustible suivant la revendication 1, caractérisé en ce que la matière minérale en particules A est de la perlite ou de la vermiculite boursouflée.

3. Matériau isolant incombustible suivant la revendication 1, caractérisé en ce que le liant C est un condensat phénol-formaldéhyde.

4. Matériau isolant incombustible suivant la revendication 1, caractérisé en ce que, dans le liant C', 1' alcoyl-phénol comporte un radical alcoyle en $C_2$ à $C_{12}$.